# EUROPEAN PATENT APPLICATION

(11) **EP 1 840 711 A1**
(43) Date of publication of application: **03.10.2007**
(21) Application number: 06300315.6
(22) Date of filing: 31.03.2006
(51) Int. Cl.: G06F 3/033

(54) **One-click selection of music or other content**

(71) Applicant: Sony France S.A., 92110 Clichy La Garenne (FR)
(72) Inventor: Pachet, François, 75010 Paris (FR); Roy, Pierre, 75001, PARIS (FR)
(74) Representative: Thévenet, Jean-Bruno

(57) **Abstract**

A set of temporal phases are defined, occurring successively during the playback of music (or other content) to a user. Each temporal phase is associated with a set of selection criteria. If the user operates a selection device (which can be a computer mouse button) while a piece of music or other content is being played back, the selection phase applicable at the time of user-action is determined and further content is selected based on the selection criteria associated with the applicable phase. This enables the user, with minimal action, to influence the content being rendered. The selection criteria can be related to the meta-data of the content being played back at the time of user action. The meaning attributed to the applicable temporal phase can be varied depending on the pressure of the mouse button click.

## Description

The present invention relates to filtering in collections of multimedia content (music, videos, images, etc.). More particularly, the invention relates to the playback of music (or the rendering of other audiovisual content) to a user and, especially, to user selection of the works to be rendered.

Instead of playing CDs and DVDs on dedicated players, or looking at books, people are increasingly using computer apparatus and portable devices (mobile telephones, personal digital assistants, MP3 players, etc.) to listen to music and audio books, watch videos, view images and read texts. Often the user will wish to listen to a sequence of musical works (or have a sequence of items of other types of audiovisual content rendered) without having to make an explicit selection of each item to be rendered.

Music browser software generally allows a user to define one or more playlists including the user's choice of songs. There will usually be some thematic link between the songs the user chooses for inclusion in a given playlist, e.g. they all are of the same genre (e.g. "Rock", "Classical", etc.), they all evoke the same mood in the user (e.g. "sentimental", "angry", etc.), they are all by the same performer, etc. When the playlist is rendered (played back) to the user, the songs may be played in an order defined when the user set up the playlist, or in a random order. Thus, the user does not need to explicitly select a new song when the last one has finished playing.

However, during rendering of a given playlist the user may change his mind about the type of music he wants to hear. Perhaps he was in the mood for "Rock" music but, on playback of his "Rock" playlist, he has heard a song by a particular band and now wants to concentrate on this band's other songs (which are not in the playlist that is currently being rendered). In order to make his desired selection of the next song for playback, the user must operate the browser's controls so as to stop playback of the current playlist and explicitly select the new song (or playlist) to be played back. This is a cumbersome procedure which interrupts the of music.

Recently, new music-streaming services have been proposed which allow a user to listen to what amounts to a personalized radio station on his computer or mobile telephone. The providers of these services have large music collections including music files and associated meta-data describing the values of particular attributes of the music. These music-streaming services generally operate by allowing the user to register one or more criteria which should be taken into account when selecting songs from that collection for playback on the personalized radio station. Typically the user's selection criteria will be expressed by setting allowable values for certain attributes of the music to be rendered, those values relating to attributes that are described by the meta-data that is stored for the music files in the collection.

For example, consider the case where, for each music file, a music collection stores meta-data indicating what is the "genre", "sub-genre", "artist/band", "country", "era", "mood", "tempo" and "main instrument". A user might identify the type of songs to include in one of his personalized playlists or "radio stations" by specifying certain values to be taken by a selection of these attributes, e.g.:
- "genre": can be "rock", "disco" or "soul",
- "era": can be "1980's", "1990's" or "2000+",
- "mood": cannot be "sad", and
- "tempo": cannot be "slow".

Typically the service provider will have in its content collection numerous songs that have the user-specified combination of attribute-values. Thus, the service provider can make an arbitrary selection of songs having this combination of attributes and play them back to the user in a random order. However, if the user is dissatisfied with the selection and/or sequence of songs he is presented with, he has limited options for affecting the song being played back. Some services may allow him to jump to the next song in the sequence, but there is little else he can do.

The above explanation relates to problems affecting user-selection of music for playback, but the same processes and services are being introduced for other types of multimedia content (including video, images, text, audio books, etc.) and the same problems arise: if the user wishes to affect the selection of audiovisual work that is being rendered (played back, displayed, etc.) he must make an explicit selection - for example from within a list or from explicit choices displayed in some other way, e.g. using icons - and/or operate numerous controls to indicate one or more criteria to be used in selecting the next item.

The present invention has been made in the light of the above-described problems.

The present invention provides a method of selecting audiovisual files, as defined in the appended claims.

The present invention further provides a selection system as defined in the appended claims.

The present invention yet further provides a computer program as defined in the appended claims.

The method and system according to the invention enable a user to take minimal action and yet to make a selection of audiovisual content for rendering. In some cases the user will be able to select audiovisual content for rendering by simply making one click of a selection device such as a computer mouse or a button on a mobile telephone, PDA, etc.

The above, and other, features and advantages of the present invention will become clearer from the following description of various embodiments thereof, given by way of example, and the accompanying drawings, in which:
Fig.1 is a diagram illustrating a possible implementation of the invention using a mobile telephone;
Fig.2 is a diagram illustrating a possible implementation of the invention using a desktop computer;
Fig.3 is a set of diagrams illustrating different temporal phases defined according to various embodiments of the invention; and
Fig.4 is a block diagram showing main components of a first embodiment of content-selection system according to the invention.

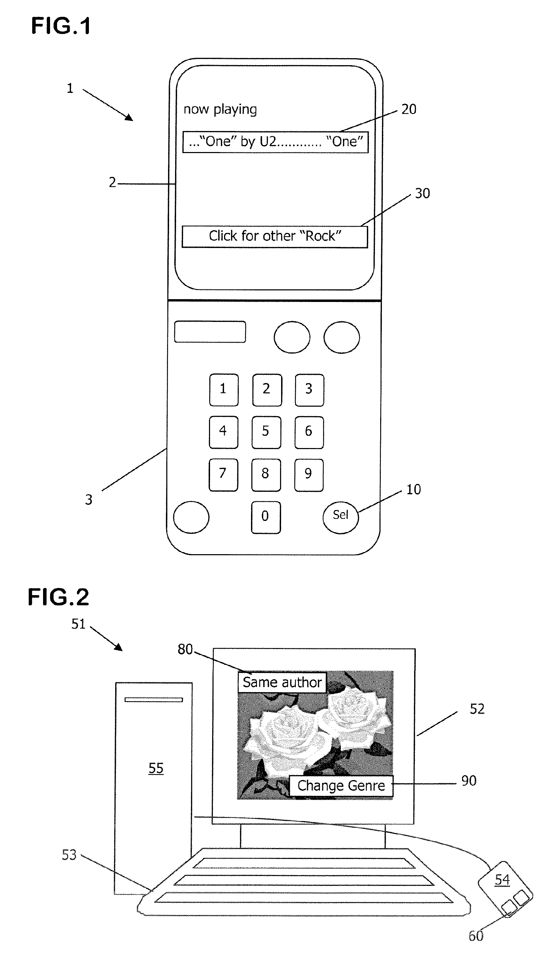

The present invention will now be described with reference to Figs.1 to 4.

The present invention allows a user who is listening to music to take minimal action in order to express criteria to be used for selecting another song to be played back. More generally, the invention enables a user to take minimal action (e.g. one click with a mouse button) in order to express criteria to be used for choosing multimedia content, notably audiovisual files to be rendered.

This is achieved by defining a number of temporal phases (which can be termed "selection phases") and associating different selection criteria with each phase. If the user takes some predetermined action - e.g. makes a click with a mouse button, presses a particular key on a keypad, etc., then the outcome of that action will be different dependent upon the selection phase that is applicable at the time when the action is taken. In particular, when the user takes the predetermined action during a time period when a particular selection phase is applicable, then content will be selected from a content collection (e.g. database) according to the set of selection criteria that is associated with this particular selection phase.

If desired, the selection criterion (criteria) that is applied when the user takes action can be related not just to the temporal phase during which the action is taken but also to some property of the user's action, e.g. the pressure the user applies on a mouse button or keyboard key (a hard click could produce a different selection than a gentle click), the duration of the user's action, etc. This increases the number of content-selection strategies available to the user whilst still allowing the user to invoke a strategy using a single action. However, in a system/method which permits the selection strategy to be invoked using a very small number of user actions (not just one) it could be envisaged to change the selection criterion/criteria associated with a given selection phase depending on a factor such as whether the user makes a single click or a double-click on a mouse button (or other control key/button), whether the user is holding down another key when he operates the user selection control, etc.

The user may be given some indication as to which selection phase is applicable at any particular moment, for example by displaying a visible message indicating the selection criteria associated with that phase. If the content selection is going to be based on information regarding some property of the user's action as well as on the timing of the user's action, then it can be helpful to provide the user with an indication of the range of options that are available at a given instant (based on the currently applicable "phase" and the different possible values for the property of his action - e.g. "hard click" or "soft click").

Another possibility consists in identifying some audiovisual work in the collection which satisfies the selection criterion (criteria) associated with a particular selection phase and, during the time interval when that phase is applicable, displaying an identifier of the identified audiovisual work to the user. If the user takes action during this selection phase then playback can jump straight to the audiovisual work identified by the displayed identifier.

The present invention can be implemented in a wide variety of different ways in terms of, amongst other things: the types of audiovisual work the user is selecting, the types of device that users can employ in order to access content, the way in which the selection phases are defined, the functionality associated with the selection phases, the source of the content that the user is accessing, etc.

Figs.1 and 2 illustrate two different examples of how certain embodiments of the invention can be implemented using different user devices.

Fig.1 illustrates an example in which a user is listening to music via a mobile telephone 1. The mobile telephone 1 has a display 2 and a keypad 3, as well as one or more loudspeakers (not shown). In the illustrated example, an indication of the song currently being played back via the loudspeaker(s) is given at a region 20 of the display 2; this is not essential but it can be helpful for the user. In this example the indication provided to the user is a scrolling message in region 20 showing the title and performer of the song being played. The keypad 3 of the mobile telephone 1 has a user-operated control according to the present invention; in the illustrated example this control is a button 10 which can be termed a "selection button". The selection button 10 need not be a dedicated button used only for the present invention; it could be a control that serves one or more other functions associated with operation of the mobile telephone 1, for example one of the keys on a standard numeric keypad, an "enter" key, etc.

During playback of songs on this mobile telephone 1 a plurality of different selection phases are defined according to the present invention, each selection phase occurring at a respective different time period. The mobile telephone 1 can be designed or adapted such that a press on the selection button 10 will cause a new song to be selected for playback and the selection criteria applicable for choosing this new song will be those associated with the selection phase that was applicable when the user pressed button 10. For example, if the user presses button 10 when the applicable selection phase is "genre" = "same as current song", and the genre of the song currently being played back is "Rock", then a new song having "genre" = "Rock" will be selected for playback.

As illustrated in Fig.1, it can be convenient to provide the user with some indication of what is the currently-applicable selection phase, for example by displaying a message in a particular region 30 of the display 2. As the selection phase changes, the message displayed at section 30 will change in a corresponding manner. The message can express the selection criteria associated with the currently-applicable phase in a variety of ways. For example, if at a time *tⱼ* the applicable selection phase is "genre" = "same as current song", and that genre is "Rock", then the displayed message could indicate that the effect of a click now would be to select another "Rock" song - as in the example illustrated in Fig.1. It should be noted that, in order to invoke the functionality indicated in the displayed message, the user is not required to position a cursor over the displayed message and click, he merely needs to click at a time when the message is displayed (i.e. at a time when the associated selection phase is applicable).

Fig.2 illustrates an example in which a user is viewing images via a computer apparatus 51. The computer apparatus 51 has a display 52, a keyboard 53, a mouse 54 and a processor section 55. In the illustrated example, an image is being rendered by being displayed on the display 52.

During rendering of images on the computer apparatus of Fig.2, a plurality of different selection phases are defined according to the present invention, each selection phase occurring at a respective different time period and the result of user action during the selection phase depending on the pressure exerted by the user. The computer apparatus can be programmed such that a click on a particular button of the mouse 54 (e.g. on the left mouse button labelled 60 in Fig.2) will cause a new image to be selected for display and the selection criterion (or criteria) applicable for choosing this new image will be that (those) associated with the selection phase that was applicable when the user clicked mouse button 60 and with the pressure applied by the user.

For example, if the user makes a hard click on the mouse button 60 when the applicable selection phase is "phase 1", this may be associated with a selection criterion "genre" = "different from current image" and, given that the genre of the image currently being displayed is "nature", then a new image having "genre" ≠ "nature" will be selected for display. On the other hand if the user makes a soft click on the mouse button 60 when the applicable selection phase is "phase 1", this may be associated with a selection criterion "author" = "same as for current image" and, assuming that the author of the image currently being displayed is "John Smith", then a new image having "author" = "John Smith" will be selected for display.

Once again, it can be helpful to provide the user with some information allowing him to know what selection criteria apply at a given moment. Fig.2 shows a first message "Same author" being displayed at a first region 80 of the display 52 at a particular moment t*ₖ*, indicating that the effect of a soft mouse click at the *time ₜₖ* would be to display an image with the same author as the current image, and a second message "Change Genre" being displayed at a region 80 of the display 52 at t*ₖ*, indicating that the effect of a hard mouse click at the time *ₜₖ* would be to display an image with a different genre from the current image.

Typically, the user's action results in immediate selection of new content, in other words, the effect of the user's action is to cause rendering of the current work to end and rendering of a new item to begin, this new item being selected according to the criterion (criteria) associated with the selection phase that has just been activated. However, this is not the only possibility. The content selected according to the activated selection phase can be chosen for rendering at some future moment (e.g. after rendering of the current item has finished, after a predetermined time interval has elapsed from the user's action, etc.). Also, as mentioned above, a particular audiovisual work satisfying the selection criteria associated with a particular selection phase can be identified before the user takes action and, if the user takes action during this particular selection phase, then the pre-selected audiovisual work is rendered.

Moreover, in theory the "new content" selected for rendering in response to the user's action might be the same content as was already being rendered when the user took his action - assuming that this audiovisual file meets the selection criterion/criteria applicable to the activated selection phase. In general, users may find it irritating to be presented with the same content twice in a row, or twice within a short space of time. To avoid this, a check can be made that the "new content" selected for rendering is not the same as the immediately-preceding content (or content rendered within a predetermined time period before the "new" content).

If it is considered that users may like the chance to have a particular file rendered twice in succession, a specific selection phase "hear this again?"/"see this again?" could be included amongst the selection phases. Typically, this selection phase would be applied near or at the end of the rendering of an audiovisual work, on the assumption that, if the user like the work sufficiently to want it to be repeated then he will want to listen to it all the way through the first time.

Furthermore, although the set of selection criteria associated with the activated phase will often be criteria for selecting a single item of content (e.g. the next one to play), there are other possibilities. For example, the selection criteria can be applied for choosing a group of works that, typically, will be rendered one after the other. In this latter case, the newly-selected group of works can be a new playlist which will continue to play back until such time as the user takes further action to change the selection criteria.

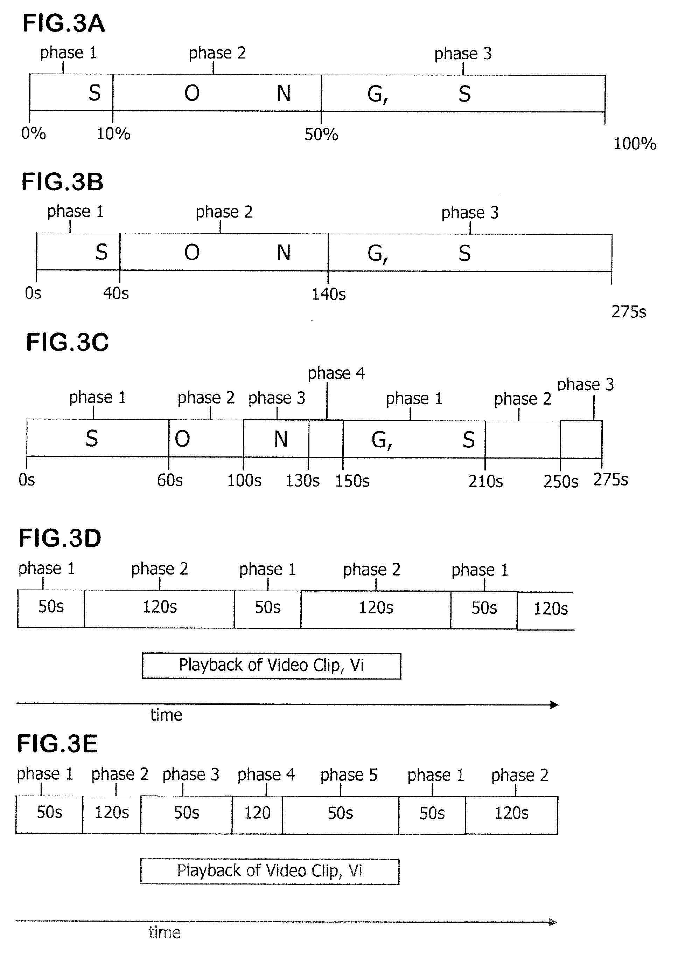

Each selection phase is associated with a duration and an order in the phase pool (first phase, second phase, etc.), as well a being associated with a particular selection criterion (or criteria). The duration and timing of the selection phases can be set in a variety of ways. Fig.3 illustrates some of the different possibilities in this regard.

The first embodiments to be considered are those in which the timing of the selection phases is related to the playback of an item of content. In these embodiments, the first selection phase will generally begin at the moment when rendering of an item of content begins (e.g. playback begins of a video clip, a piece of music, an audio book, etc., or display begins of an image or text).

In certain of these embodiments of the invention, a set of selection phases is defined, each having a duration expressed in terms of a percentage of the time taken for playback of a particular audiovisual file. Fig.3A illustrates one example of this approach. In the example shown in Fig.3A, there are three different selection phases; the first phase occupies the first 10% of the time taken for an item of content (here a song, *S*) to play back, the second phase occupies the next 40% of the playback time of song *S* and the third selection phase occupies the remaining 50% of the playback time. Fig.3B is an example according to an alternative embodiment in which the selection phases are defined so as to have a predetermined duration expressed in terms of time units (e.g. seconds). Once again, the first selection phase begins when playback of an item of content (e.g. song, *S*) begins.

It is not essential for the selection phases to occur only once during the playback of an item of content. Other embodiments of the invention define a set of selection phases which recur cyclically. Fig.3C illustrates an example of this technique. Four selection phases are defined in the example of Fig.3C: a first selection phase lasting 60 seconds, a second selection phase lasting 40 seconds, a third selection phase lasting 30 seconds and a fourth selection phase lasting 20 seconds. According to the technique illustrated in Fig.3C, the first selection phase begins when playback of an item of content (here song *S*) begins, the second selection phase begins when the first selection phase ends, the third selection phase begins when the second selection phase ends begins and the fourth selection phase begins when the third selection phase ends. However, when the fourth selection phase ends the cycle restarts, beginning at the first selection phase. The selection phases cycle until playback of the item of content ends.

The above-described examples concern cases where the different selection phases occur during rendering of an audiovisual work. However, it is also possible to define selection phases which will occur at times when no audiovisual work is being rendered (for example, at time when the user has just started up the system and has not yet make a selection of a first file or playlist for rendering). Fig.3D illustrates an example according to this approach.

In the example of Fig.3D two selection phases are defined, the first phase lasting 50 seconds and the second selection phase lasting 120 seconds. These selection phases run successively and cyclically, even at times when no audiovisual work is being rendered. In this example, the cycle of selection phases runs without regard to whether or not any audiovisual work is being rendered (i.e. the rendering of a video file *Vᵢ* does not affect the timing of the selection phases).

Fig.3E illustrates an example of yet another possible approach. In the example illustrated in Fig.3E, first and second phases run successively and cyclically at times when no audiovisual work is being rendered. However, when rendering of an audiovisual work begins (here playback of a video clip *Vᵢ),* the selection phases change to a set of three selection phases (phase 3, 4 and 5) whose respective durations are related to the duration of the video clip.

The skilled person will readily understand that different timings of the selection phases are possible besides those illustrated in Fig.3.

As indicated above, multimedia files are normally stored in association with meta-data which specifies values for the attributes of the audiovisual works represented by those files. The attributes can be Boolean, i.e. taking values "true" or "false" - for example, if the system defines an attribute "Genre=classical", this attribute would take value "true" for a music file representing Ravel's Bolero. Other types of attributes are also possible, for example: multi-valued attributes (i.e. an attribute which can take a value from a set of possible values: for example an attribute "colour" could take a value selected in a set {"red", "blue", "yellow", "green", "orange", "brown", "purple"}); numerical attributes; etc.

Embodiments of the present invention will typically define the selection phases so that they are associated with selection criteria defining permissible values for different attributes, notably attributes for which the content collection includes meta-data. The selection criteria can be expressed in absolute terms, for example: "select a file for which attribute *Aₖ* takes value *Z"*, "select a file I [the user] have marked as one of my favourites", etc.

However, a user's preferences are often perceived with reference to whether he is enjoying or not enjoying a particular audiovisual work that is currently being rendered. Thus, it can be useful to define selection criteria in a relative manner, so as to refer to the value of the audiovisual work that is being rendered at the time when the user presses the selection button 10 or clicks the mouse button 60. For example, a selection criterion could be "choose another video clip by the director of the video clip currently being played back" (assuming that video clips in the collection have meta-data indicating a value for the attribute "director"), "select a song of very different genre from the one currently playing" (assuming that songs in the collection have meta-data indicating a value for the attribute "genre" and assuming that known techniques are employed for evaluating what are "different" genres), "choose an image evoking the same mood as the currently-displayed image" (assuming that images in the collection have meta-data indicating a value for the attribute "mood"), etc.

In some cases the selection criteria can be determined dynamically based on the attributes of the audiovisual work that is being rendered. For example, if a song is being played back and this song has the value "true" for a Boolean attribute "main instrument=electric guitar", then a selection phase could be defined associated with a selection criterion seeking other songs having electric guitar as main instrument.

The meta-data associated with the audiovisual file being rendered is a ready source of data regarding the attribute-values of the audiovisual file and can be consulted when dynamically defining selection criteria in the above-mentioned way. However, this is not the only possibility. For instance, some meta-data can be computed on the fly for the work currently being rendered and the freshly-computed attribute-value data can be used as part of the selection process. An example of the latter approach involves meta-data defining the length of a music title; this attribute-value is quick to compute and so, often, is not stored for the music file in question. If the user activates a selection phase associated with a selection criterion "something longer", the duration of the currently-playing music title can be computed (say, 124 seconds) and the selection criterion can be dynamically set to "songs longer than 124 seconds".

In some cases the selection criteria will be predefined, as will the duration and timing of the selection phases.

For example, in the case of a system in which a service provider offers users streamed content from a large collection of audiovisual works, the service provider may decide ahead of time that he will offer users a particular set of options for influencing the selection of streamed content - i.e. a particular set of selection criteria - and that he will assign particular durations and timings to the phases during which these options are available to the user (and, possibly, that he will associate two or more different sets of selection criteria to a given selection phase, each set being associated with a different manner of user operation of the selection control device (e.g. different operation pressure, different duration, etc.)).

When defining the selection criteria to be associated with the different selection phases, the service provider typically will take into account which attributes are likely to be interesting to a large number of different users. When setting the durations and ordering of the selection phases, the service provider may have regard to the section criteria which he considers likely to be the most popular, presenting those options first (i.e. associating those selection criteria with the first phase or first few phases).

To take a different example, in the case where a user has a large collection of content (e.g. a database of still images) and he wishes to use the techniques of the present invention for selecting content from within his own collection, the user himself may define the timing and duration of the selection phases, as well as the selection criteria associated with each phase, based on his own preferences and browsing behaviour.

Yet another variant consists in having an initial definition of selection phases and applying this initial definition when the content-selection system is first used, then changing the definition of the selection phases based on a real-time analysis of the user's content-selection behaviour. For example, if the user takes action a large number of times to select content according to one particular selection phase (e.g. a selection phase associated with selection criterion "another work by the same author"), then the definitions of the selection phases may be changed so as to increase the priority accorded to this selection phase (e.g. present this selection phase first, increase the duration of this selection phase, etc.). If the user never takes action to select content according to a particular selection phase, the selection phase definitions may be changed so as decrease the priority accorded to that selection phase (e.g. by decreasing its duration, changing its order in the list of selection phases so that it appears later, etc.) Typically the real-time analysis of user content-selection behaviour will analyse the frequency with which the user activates different selection phases; however, other features could be assessed as well or instead (e.g. how soon after a selection phase begins the user activates that phase).

It is likely that content-selection systems according to the present invention will be implemented using software applications or modules loaded on processing equipment in a general-purpose computer system, mobile phone, PDA etc., and that these content-selection applications/modules will interact with other applications or modules. For example, a content-selection system is likely to be used by a service provider who has a collection of content available as files for download or streaming to remote computers, mobile phones, etc. In such a case, the content-selection system/application is likely to be associated with a database management application at the service provider side and with content rendering software at the user side. Content-selection systems according to the invention may also be used by individuals who have their own collections of audiovisual files. In such a case the content-selection system is likely to be implemented as a software application/module associated with (or integrated into) a browsing application/module.

Although the present invention can provide a "universal" content-selection system suitable for selecting audiovisual files of all the different kinds (or a combination of two or more different kinds), it is more likely that separate systems will be built each designed for handling a respective different kind of audiovisual file, e.g. just for selecting music, just for selecting video, etc. (because most commercial content-download services and content-browsers relate to a respective single kind of audiovisual work).

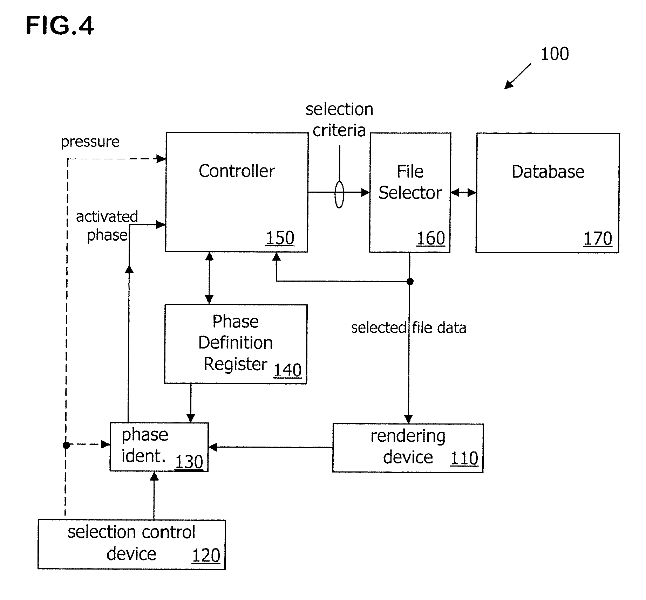

Fig.4 illustrates the main components of a first embodiment of a content-selection system 100 according to the present invention.

In the content-selection system 100 illustrated in Fig.4, a rendering device 110 is provided for rendering content in a manner that is perceptible to a user. Clearly, the nature of the rendering device 110 will depend on the type of audiovisual file that the user is intended to access via this system. For example, in a case where the system 100 is designed to allow the user access to music and video files, the rendering device can include a display and a loudspeaker.

The system 100 includes a selection control device 120 operable by the user to influence the selection of content which is rendered via the rendering device 110. At its simplest, this selection control device 120 can be a key or button such as a mouse button, or a key on a standard computer keyboard or telephone keypad. However, it could be a special control element dedicated to this content-selection application. The user may be provided with some indication as to which selection phase is applicable at any given time. Typically this will be via a message or icon displayed on a display forming part of the rendering device 110 or on another display device (not shown).

When the user operates the selection control device 120, a phase identifier module 130 determines which selection phase was applicable at the moment of user action. The definitions of the various selection phases are stored in a register 140 (which can take the form of any suitable memory or data storage device, including a removable recording medium). Typically, the phase definition register 140 stores, for each selection phase, data indicating the duration of this selection phase, data indicating the position of this phase in the phase pool, and data indicating the selection criterion or criteria associated with this phase (e.g. identifying an attribute and a condition applying to the value(s) of that attribute).

Depending upon the way in which the system 100 is implemented, there may be more than one set of selection criteria associated with a given selection phase and the applicable set can be determined by evaluating a property of the user's operation of the selection control device 120. For example, if the selection control device 120 is a button or key, the evaluated property could be: the degree of pressure applied to the button or key, this pressure being measured using one or more pressure sensors, the time period during which the button or key is depressed, etc. The phase definition register 140 may store data indicating the relationship between the applied pressure (duration, or other evaluated property of the user's action) and the various selection criteria.

The phase definition register 140 may also store rule data indicating a start point in time from which the selection phases will run (e.g. start phase 1 on commencement of rendering of an audiovisual work by the rendering device, start phase 1 ***P*** seconds after system initialization, etc.). Alternatively, this rule data may be stored in the phase identifier module 130 or built into the design of the phase identifier module 130 (e.g. by virtue of the presence of an internal timer in the phase identifier module 130 that is reset by the rendering device 110 when it begins rendering a new audiovisual work).

There are numerous different ways in which the phase identifier module 130 can determine the selection phase that is applicable at the moment when the user operates the selection control device 120. For example, the phase identifier module 130 can contain a continuously-updated register which holds data identifying the currently-applicable phase and, when the user operates the selection control device 120, the data in this register can be read out. Updating of the register can be achieved using latches and timing or delay elements controlled according to the relevant phase duration information in the phase definition register 140.

As another example, the phase identifier module 130 can include a timer and, when the user operates the selection control device 120, this timer is read to determine a kind of time stamp for the user's action. The timer can be set to real time but this is not essential: for example, the timer could be reset whenever rendering of a new audiovisual file begins on the rendering device 110. The phase identifier module 130 can also include a comparator designed to compare the timing of the user's action with the timing of the selection phases (determined from the selection phase duration information in the phase definition register 140 and from the rule data defining the phase start point).

Whatever approach it uses for determining phase, the phase identifier module 130 outputs data identifying which phase was applicable at the moment when the user operated the selection control device 120 - this can be designated the "activated phase".

The selection control system 100 includes a controller 150 which receives the data identifying the activated phase and determines what selection criterion or criteria are associated with that activated phase. This will generally be done by consulting the relevant selection phase definition in the phase definition register 140. However, in a case where the activated phase is associated with a selection criterion that defines an attribute-value in a relative fashion, i.e. relative to the value of the corresponding attribute of an audiovisual file currently being rendered, the controller 150 may also analyse attribute-value data applicable to the file currently being rendered.

Depending upon the way in which the system 100 is implemented, the controller 150 may also input data indicating the pressure the user applied to the selection control device 120 (or some other evaluated property of the user's action on the selection control device 120) and determine the applicable selection criterion/criteria based on the activated phase and on the pressure data (or other evaluated property of the user's action).

The controller 150 supplies data defining the applicable selection criterion/criteria to a file selector 160 which filters a database or other content collection 170 using the applicable selection criterion/criteria. Typically, each selection criterion will be expressed in terms of a condition holding on the value of an attribute defined by the meta-data that is stored in association with the various audiovisual files in the database or collection 170, so identifying files which satisfy the selection criteria is a simple matter of reviewing the meta-data of the stored files. Usually there will be a plurality of files in the database 170 that satisfy the selection criteria applicable at a given moment. The file selector 160 can be designed to make a choice from within the set of files that satisfy the selection criteria and output file data for the chosen file to the rendering device 110; this choice can be random or it can be based on some rule, for example "choose the files which the user has listened to least (or most) often", etc.

The various modules and devices shown in Fig.4 may all form part of a common apparatus, for example in a case where the content-selection system 100 forms part of a user apparatus which the user uses to playback content in a locally-held personal content collection (e.g. a music database held on the user's own desktop computer). However, this will not always be the case. Numerous other configurations can be envisaged.

Depending on the application in which the content-selection system 100 is used, only some of the system elements may be located at the user end, others may be remote from the user. For example, in an application where a service provider provides streamed content to a remote user, the user may only have the rendering device 110 and the selection control device 120 at his end, all of the other system elements 130-170 may be remote from the user, in a server installation held at the service provider's office. In such a case, it can be sufficient to send, from the user side to the server side, time stamp data (and, possibly, a scalar value indicating a pressure or the like applied to the selection control device 120) relating to the user's operation of the selection control device 120. A choice of content will then be made at the server side and new content supplied to the user's rendering device.

The various embodiments of the present invention provide a user with different possibilities for influencing the flow of content (e.g. a music playlist) at any given time, without requiring the selection of items in lists, or the manipulation of several interface widgets. Only one "click" information is needed. Information is presented to the user in such a way that he can explore a wide variety of different browsing strategies for influencing the playlist, using a single click.

In a variant of the present invention, the selection criterion (or criteria) applicable when a user operates the selection control device is determined not by a temporal selection phase applicable at the time of user action, but solely by a property of the user's action on the selection control device (e.g. pressure on a control button or key, speed of depression of a button or key, duration of a press on a button or key, the "size" or speed of movement of a mouse across a mouse pad, etc.). An appropriate detection device is associated with the selection control device, and the stored definitions relate, not to temporal selection phases, but to the different values of the appropriate property of the user action on the selection control device.

In the case of this variant too, it can be useful to give the user some indication as to which selection criterion/criteria is applicable for any given value of the property of user action, for example by displaying a visible message indicating the selection criteria associated with "hard" or "soft" key pressure, etc.

Although the present invention has been described above in terms of particular embodiments thereof, the skilled person will readily understand that various changes and developments may be made in the details of the above-described embodiments, and other embodiments can be implemented, without departing from the scope of the present invention as defined in the appended claims.

For example, although the discussion of Fig.4 indicates that there may be particular distributions of functions between various system components, it is to be understood that the split of functions could be made differently. Moreover, in many implementations of the present invention it may not be possible to separate out discrete elements which perform the respective functions which, above, have been ascribed to the different elements of Fig.4. Various combinations of the modules may be merged into common units. In addition, the various modules illustrated in Fig.4 do not necessarily represent physical devices. The corresponding functions can, and generally will, be implemented in software.

Moreover, although Figs.1 and 2 illustrate a mobile telephone and a desktop computer as examples of apparatus via which a user can make content selections according to the present invention, these are not the only possibilities. The present invention can be used with other devices including, but not limited to, laptop computers, handheld computing devices, personal digital assistants, and MP3 players. Furthermore, it is possible to envisage systems employing the techniques of the present invention in which a first device is used for rendering content for perception by the user but a second device is operated by the user in order to influence the selection of content to be rendered.

Figs.1 and 2 provide examples of messages that could be displayed to a user so as to indicate the selection phase applicable at a given moment (and, if appropriate, the effect of different ways - pressures, durations - of operating the selection control device). The skilled person will understand that the format and content of messages of this type can be varied. Moreover, in a suitable case (e.g. during viewing of text documents or still images) the user could be provided with an audible indication of the applicable selection phase, rather than a visual indication thereof.

As explained above, in some cases there are a plurality of sets of selection criteria associated with each selection phase, and the relevant set to be applied when a selection phase is activated depends on some property of the user's action (e.g. the speed of depression of a selection control key). The skilled person will readily understand that the selection criteria can be defined in such a way that a particular value for this property of the user's action will always result in the same selection criterion being applied, regardless of the selection phase - e.g. a one-second press on a selection control button will cause the currently-rendered work to be repeated regardless of what selection phase was applicable at the time of the button-press. In practice, this can be achieved by ensuring that all of the selection phases have at least one set of selection criteria in common, this common set being invoked when the property of the user's action takes the predetermined value.

The examples discussed above mainly refer to applications of the invention in which the selected content is music or still images. However, it is to be understood that the present invention is applicable to the selection of multimedia content of various types, i.e. substantially any type of audiovisual file including but not limited to audio files, video files, image files and text files.

Finally, although the examples discussed above mainly refer to applications of the invention in which content is selected for rendering, the same techniques could be used for selecting content independently of rendering thereof: for example, the selection of content for purchase, for downloading and storing in a memory, for transfer to a third party, for deletion, etc. If the selection of content takes place at a time when the user is not listening to (viewing or otherwise experiencing) content, the timing of the selection phases will not be linked to the start of rendering of a file; instead it may be linked to other factors - for example, the time spent browsing an information page relating to a work - or it could be linked to instants defined by an internal timer.

## Claims

1. A method of selecting audiovisual files in a collection, the method comprising the steps of:
defining a plurality of temporal phases, wherein each temporal phase has a predefined duration in time and is associated with a set of one or more selection criteria;
monitoring the timing of user operation of a selection control device;
when user operation of the selection control device is detected, determining which of the temporal phases is applicable at the time of operation; and
using at least one selection criterion associated with the applicable temporal phase to select one or more audiovisual files in said collection.

2. A method of selecting audiovisual files according to claim 1, and comprising the step of rendering an audiovisual file in a manner perceptible to a user, wherein said selection criteria define permissible values for attributes of audiovisual files and at least one of the temporal phases is associated with a selection criterion defining a permissible attribute-value with reference to the value of the corresponding attribute of the audiovisual work being rendered at the time of user operation of the selection control device.

3. A method of selecting audiovisual files according to claim 2, wherein the step of defining the temporal phases comprises determining the value of at least one attribute of said audiovisual file being rendered and associating a temporal phase with a condition holding on the value of said at least one attribute.

4. A method of selecting audiovisual files according to claim 1, 2 or 3, wherein the step of monitoring the timing of user operation of a selection control device comprises monitoring the timing of operation of a button or key.

5. A method of selecting audiovisual files according to claim 4, and comprising the step of monitoring the pressure of operation of said button or key, wherein the at least one selection criterion used to select audiovisual files in said collection depends on the pressure of operation of said button or key as well as on the temporal phase applicable at the time of user-operation of the selection control device.

6. A method of selecting audiovisual files according to any one of claims 1 to 5, wherein the step of defining said temporal phases comprises defining a cyclical order of the plurality of temporal phases.

7. A method of selecting audiovisual files according to any one of claims 1 to 6, and comprising the steps of:
making a real-time analysis of user-operation of the selection control device during the respective temporal phases, and
changing the definition of said temporal phases dependent on said real-time analysis.

8. A software program having a set of instructions which, when in use on processing apparatus, cause the processing apparatus to perform the steps of the method of any one of claims 1 to 7.

9. An audiovisual-file selection system (100) for selecting audiovisual files in a collection, the system comprising processing apparatus programmed to perform the method of any one of claims 1 to 7.

10. An audiovisual-file selection system (100) according to claim 9, wherein said processing apparatus forms part of a device selected in the group consisting of: computer apparatus, a mobile telephone, a personal digital assistant, and an MP3 player.

11. An audiovisual-file selection system (100) for selecting audiovisual files in a collection (170), the system comprising:
means (140) defining a plurality of temporal phases, each temporal phase having a predefined duration in time and being associated with a set of one or more selection criteria;
input means (130/150) for determining the timing of user operation of a selection control device (120);
identification means (150) for identifying the temporal phase applicable at the timing determined by the input means (130/150); and
file selection means (160) for selecting one or more audiovisual files in said collection (170), the selection being based on at least one selection criterion associated with the temporal phase identified by the identification means (150) .

12. An audiovisual-file selection system (100) according to claim 11, and comprising a memory storing said collection (170).

13. An audiovisual-file selection system according to claim 11 or 12, adapted to communicate with a remote user-operable selection control device (120).

14. An audiovisual-file selection system (100) according to claim 11, adapted to communicate with a remote memory storing said collection (170) of audiovisual files.
